(19) **Europäisches Patentamt / European Patent Office / Office européen des brevets**

(11) **EP 4 377 400 B1**

(12) **FASCICULE DE BREVET EUROPEEN**

(45) Date de publication et mention de la délivrance du brevet:
**30.04.2025 Bulletin 2025/18**

(21) Numéro de dépôt: **22755194.2**

(22) Date de dépôt: **27.07.2022**

(51) Classification Internationale des Brevets (IPC):
**C08L 89/06** (2006.01)   **B29C 48/00** (2019.01)

(52) Classification Coopérative des Brevets (CPC):
**C08L 89/06; B29C 48/022; B29C 48/07; B29C 48/405;** B29K 2089/00; B29K 2911/08

(86) Numéro de dépôt international:
**PCT/EP2022/071026**

(87) Numéro de publication internationale:
**WO 2023/006795 (02.02.2023 Gazette 2023/05)**

(54) **PROCÉDÉ DE FABRICATION D'UNE FEUILLE DE CUIR**

**VERFAHREN ZUR HERSTELLUNG EINER LEDERBAHN**

**METHOD FOR MANUFACTURING A SHEET OF LEATHER**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2021 FR 2108316**

(43) Date de publication de la demande:
**05.06.2024 Bulletin 2024/23**

(73) Titulaire: **Authentic Material**
**31120 Portet-sur-Garonne (FR)**

(72) Inventeurs:
• **HER JUMEAUX, Margaux**
**31500 TOULOUSE (FR)**
• **VERNIOLLE, Paul**
**31400 TOULOUSE (FR)**
• **ROUILLY, Antoine**
**31400 TOULOUSE (FR)**

(74) Mandataire: **Ipside**
**6, Impasse Michel Labrousse**
**31100 Toulouse (FR)**

(56) Documents cités:
EP-A1- 2 997 830     WO-A1-2009/135239

EP 4 377 400 B1

**Description**

La présente invention s'inscrit dans le domaine de la valorisation des matières d'origine naturelle, plus précisément d'origine animale.

Plus particulièrement, la présente invention concerne un procédé de préparation d'une feuille de cuir à partir d'une matière à base de cuir, notamment de déchets de cuir.

L'épuisement programmé des ressources fossiles incite depuis plusieurs années les industriels à développer des solutions de remplacement mettant en œuvre des ressources renouvelables, et ce dans tous les domaines de l'industrie. Le recyclage et la valorisation des déchets d'origine animale ou végétale revêtent à ce titre un intérêt croissant, tant du point de vue économique qu'environnemental. Il a ainsi été proposé par l'art antérieur de fabriquer des articles en matériaux solides formés à partir de déchets d'origine animale ou végétale, en visant à ce que de tels articles tirent profit des propriétés tant esthétiques que mécaniques des matières naturelles dont ils sont formés.

Le document EP 2 997 830 décrit un procédé de fabrication d'un objet à mâcher mou pour chien à partir de déchets et morceaux de peau animale. Ce procédé comprend la pulvérisation de ces derniers pour former des granules qui sont ensuite trempés dans l'eau pour permettre leur gonflement par absorption d'eau à saturation, puis chauffés de sorte à provoquer leur fusion en collagène visqueux et élastine, c'est-à-dire en gélatine. En raison de sa viscosité et de sa capacité à s'agglomérer, la gélatine obtenue lie alors les granules dans un état colloïdal. Le colloïde obtenu est enfin mis en forme par extrusion.

Les matières d'origine naturelle du type à fort taux de collagène, telles que le cuir, présentent à cet égard un intérêt particulier, du fait d'une part de la quantité importante de déchets industriels issus de l'élevage ou de rebuts de production tels que des chutes générées lors du travail du cuir, et d'autre part de l'aspect esthétique attractif des articles en cuir.

La reconstitution d'une feuille continue à partir de déchets de cuir se heurte néanmoins à nombre de problèmes techniques, et aucune solution n'a été proposée par l'art antérieur pour former, à partir de tels déchets, une feuille de cuir présentant de bonnes propriétés de résistance mécanique et un aspect esthétique satisfaisant.

La présente invention vise à proposer un procédé pour la fabrication, à partir de déchets de cuir, d'une feuille de cuir présentant de telles caractéristiques. L'invention vise également à ce que ce procédé soit simple et rapide à mettre en œuvre, et le plus respectueux possible de l'environnement.

Les présents inventeurs ont maintenant découvert que ces objectifs peuvent être atteints, et qu'il est possible, à partir de déchets de cuir, notamment sous forme particulaire, de fabriquer une feuille qui présente un bel aspect esthétique, une souplesse équivalente à celle de la matière originale et des propriétés mécaniques tout à fait satisfaisantes, ceci par un procédé comprenant plus particulièrement une étape de traitement des déchets de cuir par extrusion dans des conditions assurant un défibrage des fibres de collagène entrant dans la constitution du cuir, sans provoquer de dégradation et/ou dénaturation de ces dernières, puis une étape, réalisée directement sur le matériau ainsi obtenu, de mise en forme de feuille, en particulier selon les techniques classiquement utilisées dans l'industrie papetière pour la fabrication des feuilles à base de cellulose. En particulier, il a été découvert par les présents inventeurs que, de manière surprenante, il est alors possible d'obtenir une feuille présentant une bonne cohésion, au sein de laquelle les fibres de collagène se sont réassemblées en réseau cohésif, y compris lorsque la technique utilisée pour la mise en forme est, tel que c'est typiquement le cas pour les techniques mises en œuvre dans l'industrie papetière, réalisée dans des conditions de contraintes mécaniques douces, à température ambiante, en présence d'eau uniquement, et notamment en l'absence de tout liant.

La présente invention concerne ainsi un procédé de fabrication d'une feuille à base de cuir à partir d'une matière contenant au moins 70 % en poids de cuir, notamment de déchet(s) de cuir, ce cuir étant préparé à partir de peau d'un animal non-humain.

Une feuille est définie dans la présente description, de manière classique en elle-même, comme une mince plaque, d'épaisseur typiquement entre 0,1 mm et quelques millimètres, plus ou moins souple / flexible en fonction du matériau qui la constitue, ce matériau étant constitué essentiellement de fibres enchevêtrées et agglutinées, formant réseau.

On entend en outre dans la présente description, par le terme « cuir », de manière classique en elle-même, une peau d'animal ayant été soumise à des opérations de tannage et corroyage, de sorte à la rendre imputrescible. Le cuir contient un taux élevé de fibres de collagène, une protéine structurale fibreuse, formant une triple hélice, présente dans les tissus conjonctifs des animaux et ayant pour fonction de conférer à ces tissus une résistance mécanique à l'étirement. Le collagène, plus précisément le collagène de type I, est notamment la protéine majoritaire du derme des animaux.

Les déchets de cuir utilisés selon l'invention peuvent être de tout type, notamment des rebuts de production de l'industrie du cuir, des articles ou parties d'articles en cuir usagés, etc.

Plus particulièrement, le procédé selon l'invention comprend :

- la préparation d'une pâte, de type fibreux, par une étape de traitement de la matière contenant au moins 70 % en poids de cuir préparé à partir de peau d'un animal non-humain, dite ci-après « matière initiale », dans une extrudeuse bi-vis à une température comprise entre 10 et 40 °C, en présence d'eau dans une quantité telle que le rapport en poids d'eau par rapport à ladite matière est compris entre 1,7 et 6, de préférence compris entre 1,7 et 4, de sorte à réaliser un défibrage des fibres de collagène contenues dans le cuir ;

- et la mise en forme de cette pâte en feuille.

La matière initiale peut être formée d'un unique matériau ou d'un mélange d'une pluralité de matériaux, par exemple un mélange de plusieurs types de déchets de cuir différents.

Préférentiellement, la matière initiale ne comprend aucune substance polymère ou précurseur de polymère. Au cours de l'étape de traitement par extrusion du procédé selon l'invention, la matière initiale n'est en outre de préférence mélangée à aucune substance polymère ou précurseur de polymère. L'étape de traitement par extrusion du procédé selon l'invention n'est ainsi nullement une étape de compoundage, mettant en œuvre un liant polymère, mais une étape de défibrage de la matière sous l'effet des forces exercées sur elle dans l'extrudeuse bi-vis.

Plus particulièrement, et sans présumer des phénomènes physico-chimiques se produisant au sein de la matière lors de la mise en œuvre de l'étape d'extrusion du procédé selon l'invention, on peut penser que lors de cette étape, réalisée à une température ne provoquant pas de dénaturation du collagène, en présence d'une quantité d'eau importante, il se produit une séparation des fibres de collagène entrant dans la constitution de la matière initiale. La combinaison des forces de cisaillement qui sont exercées sur la matière dans l'extrudeuse et de l'eau en excès, dans la proportion préconisée par l'invention, a en particulier pour effet de provoquer le déroulement et l'étirement des fibres de collagène contenues dans la matière, résultant en l'obtention de longues fibres oblongues individualisées. La pâte humide obtenue en sortie de l'extrudeuse bi-vis est ainsi de type fibreux, c'est-à-dire formée de longues fibres de collagène individualisées juxtaposées. Ces fibres reconstituent un réseau lors de l'étape de mise en forme de feuille ultérieure et créent avantageusement alors des interactions suffisamment importantes pour maintenir la cohésion de la feuille obtenue et lui assurer de bonnes propriétés de résistance mécanique.

Le procédé selon l'invention est avantageusement simple à mettre en œuvre, et il n'utilise aucun solvant organique ou autre substance nocive pour l'environnement.

Le procédé selon l'invention peut en outre répondre à l'une ou plusieurs des caractéristiques décrites ci-après, mises en œuvre isolément ou en chacune de leurs combinaisons techniquement opérantes.

La matière initiale à partir de laquelle est appliqué le procédé selon l'invention contient majoritairement du cuir issu du derme d'animal non-humain. Cet animal peut notamment être un reptile ou un mammifère, par exemple un bovin ou un ovin.

Ce cuir peut être de tout type, et notamment aussi bien être obtenu par traitement du derme des animaux par des agents tannants végétaux, que par tannage au chrome ou par des tannins synthétiques.

Selon l'invention, la matière initiale peut contenir au moins 80 % en poids, ou encore au moins 90 % en poids ou même au moins 95 % en poids, de cuir, notamment de déchet(s) de cuir.

La matière initiale contenant au moins 70 % en poids de cuir se présente préférentiellement sous forme particulaire.

On entend, par forme particulaire, le fait que la matière initiale se trouve sous forme de particules plus ou moins grossières, de taille de quelques dizaines ou centaines de micromètres ou plus, pouvant aller jusqu'à quelques centimètres. Préférentiellement, la granulométrie de la matière initiale, mesurée par tamisage, est comprise entre 5 mm et 10 cm. Lorsque la matière initiale est sous forme de morceaux de plus grande taille, le procédé selon l'invention comprend de préférence une étape préalable de découpage et/ou broyage de cette matière en particules de plus petite taille, par exemple au moyen d'un broyeur à couteaux.

Les particules de matière peuvent en outre présenter toute forme et tout taux d'humidité.

La matière initiale peut autrement se présenter sous forme de pâte, à base notamment d'un mélange de cuir et d'eau.

La quantité d'eau à ajouter à la matière initiale, pour obtenir un rapport en poids eau / matière initiale (poids de matière sèche ou poids de son extrait sec lorsqu'elle contient déjà de l'eau) compris entre 1,7 et 6, de préférence entre 1,7 et 4, dépend du taux d'humidité de départ de la matière initiale. Ainsi, le procédé selon l'invention peut comprendre une étape de détermination du taux d'humidité de la matière initiale, puis la détermination de la quantité d'eau à lui ajouter pour obtenir le rapport en poids d'eau par rapport à la matière initiale sèche souhaité, ce rapport étant compris entre 1,7 et 6, de préférence entre 1,7 et 4.

On entend dans la présente, par taux d'humidité, de manière classique en elle-même, le pourcentage en masse d'eau contenue dans la matière, par rapport à la masse totale de matière, dans des conditions de 60 % d'humidité relative de l'air et à 20 °C environ. Ce taux d'humidité peut notamment être déterminé par comparaison du poids d'un échantillon de matière avec le poids de ce même échantillon après qu'il ait été soumis à une étape de séchage à plus de 100 °C jusqu'à obtenir un poids de l'échantillon sensiblement constant.

Il a été observé par les présents inventeurs que, de manière surprenante, seul un rapport en poids « eau / matière » compris entre 1,7 et 6 permet de former une pâte fibreuse, à base de fibres longues et individualisées, dans l'extrudeuse bi-vis. En-dessous de 1,7, l'extrudât obtenu en sortie de l'extrudeuse bi-vis se trouve sous forme pulvérulente, et est inapte à être mis en forme en feuille. Au-dessus de 6, l'individualisation des fibres n'est pas satisfaisante, si bien que la pâte obtenue ne peut pas non plus être soumise à une étape ultérieure de mise en forme de feuille. L'individualisation de longues fibres de collagène lors l'étape de traitement dans l'extrudeuse bi-vis du procédé selon l'invention est avantageusement optimale, en vue de la mise en forme de feuille ultérieure, pour des rapports en poids d'eau par rapport à la matière initiale sèche compris entre 1,7 et 4.

La mise en présence de la matière initiale avec l'eau peut être réalisée de différentes manières.

Dans des modes de mise en œuvre préférés de l'invention, la matière initiale est introduite dans l'extrudeuse telle quelle, et une solution aqueuse est également introduite dans l'extrudeuse, indépendamment de la matière initiale. Ainsi, la mise en présence de la matière initiale et de l'eau est réalisée par introduction d'une solution aqueuse dans l'extrudeuse bi-vis.

Le débit d'alimentation de solution aqueuse dans l'extrudeuse est alors de préférence constant, et calculé pour obtenir le rapport en poids eau / matière sèche souhaité. Un tel calcul entre dans les compétences de l'homme du métier, qui prendra notamment en compte pour le réaliser le débit d'alimentation de la matière initiale dans l'extrudeuse et le taux d'humidité de départ de cette matière. Dans des modes de mise en œuvre particuliers de l'invention, la mise en présence de la matière initiale et de l'eau est réalisée par introduction d'une solution aqueuse dans l'extrudeuse bi-vis en amont d'une première zone de malaxage que comporte l'extrudeuse bi-vis, par exemple en fin de la zone de convoyage précédant immédiatement la première zone de malaxage, dans le sens de défilement de la matière dans l'extrudeuse. La matière initiale est alors intimement mélangée à la solution aqueuse dans cette zone de malaxage.

Dans des variantes de l'invention, la matière initiale est imprégnée avec une solution aqueuse avant son introduction dans l'extrudeuse. Cette imprégnation est de préférence réalisée pendant 12 à 30 heures, de préférence à une température comprise entre 1 et 10 °C. L'étape d'imprégnation comprend préférentiellement au moins une phase initiale d'agitation, de sorte à assurer un mélange homogène de l'eau avec la matière initiale. L'agitation peut être poursuivie pendant toute ou partie de l'étape d'imprégnation. Les quantités respectives de solution aqueuse et de matière initiale mélangées sont déterminées pour obtenir le rapport en poids eau / matière initiale souhaitée. Pour l'un ou l'autre des modes de mise en œuvre ci-dessus, la solution aqueuse peut être constituée uniquement d'eau. Elle peut autrement contenir au moins une substance additionnelle.

La solution aqueuse peut notamment contenir un agent de décomplexation des complexes chrome-collagène, qui ont pu être formés au sein du cuir lors des procédés de tannage au chrome. La mise en œuvre d'un tel agent de décomplexation dans la solution aqueuse permet avantageusement de faciliter la pénétration de l'eau dans la matière initiale lors de l'étape de traitement par extrusion. Cet agent de décomplexation peut notamment consister en de l'hydroxyde de sodium et/ou de l'hydroxyde de magnésium, par exemple à une concentration dans l'eau comprise entre 10 et 40 g/l. Il peut autrement par exemple s'agir d'oxalate, et en particulier d'oxalate d'ammonium et/ou d'oxalate de sodium, par exemple à une concentration dans l'eau comprise entre 25 et 40 g/l. L'hydroxyde de sodium, tout comme l'oxalate, présentent l'avantage d'être facilement disponibles et de présenter une bonne capacité de dissolution dans l'eau.

La solution aqueuse peut également ou autrement contenir un ou plusieurs agents tensioactifs.

Le débit d'entrée de la matière initiale dans l'extrudeuse bi-vis est de préférence constant. Dans des modes de mise en œuvre particuliers de l'invention, il est compris entre 1 et 15 kg/h, exprimé en poids de matière sèche. Comme indiqué ci-avant, la matière initiale introduite dans l'extrudeuse peut présenter tout taux d'humidité initial.

La température au sein de l'extrudeuse bi-vis est de préférence comprise entre 15 et 35 °C, de préférence encore comprise entre 20 et 30 °C. Préférentiellement, cette température est constante au sein de l'extrudeuse.

L'extrudeuse bi-vis mise en œuvre selon l'invention peut être de tout type classique en lui-même. Elle est de préférence du type à vis co-rotatives, préférentiellement de type interpénétrantes. Les vis mises en œuvre peuvent présenter tout profil et tout pas de vis.

La vitesse de rotation des vis de l'extrudeuse bi-vis est de préférence comprise entre 100 et 700 tours/min, et préférentiellement entre 400 et 650 tours/min. Une vitesse comprise dans cette plage de valeurs est avantageusement, d'une part, suffisamment élevée pour assurer un bon défibrage des fibres de collagène au sein de la matière traitée dans l'extrudeuse, et d'autre part, suffisamment basse pour ne pas risquer que cette matière se désintègre dans l'extrudeuse.

L'extrudeuse bi-vis mise en œuvre selon l'invention peut comporter une ou plusieurs zones de travail. La matière traverse successivement ces zones, depuis une première extrémité, dans laquelle la matière initiale est introduite dans l'extrudeuse, jusqu'à une deuxième extrémité, de laquelle la matière traitée sort hors de l'extrudeuse.

L'extrudeuse bi-vis mise en œuvre selon l'invention comporte de préférence une ou plusieurs zones de convoyage, avec et/ou sans compression de la matière, de préférence du type à pas direct, et une ou plusieurs zones de malaxage. Toute combinaison de telles zones dans l'extrudeuse entre dans le cadre de l'invention. Dans des modes de mise en œuvre préférés de l'invention, l'extrudeuse bi-vis comporte une zone de convoyage avant et après chaque zone de malaxage.

Préférentiellement, elle ne comporte pas de zones à vis à pas inverse.

Préférentiellement, l'extrudeuse bi-vis comporte au moins trois zones de malaxage, par exemple 3 à 8 zones de malaxage. Les zones de malaxage sont de préférence du type malaxeurs bilobes. Au sein de chaque zone de malaxage, les malaxeurs sont de préférence montés sur leurs vis respectives avec des inclinaisons inverses, par exemple comprises entre 5 et 90 degrés pour l'un et entre -5 et -90 degrés pour l'autre. Leurs inclinaisons sont par exemples égales, respectivement, à -30 et +30 degrés.

Le temps de séjour de la matière dans l'extrudeuse bi-vis dépend de la vitesse de rotation des vis, et du nombre et de la longueur des zones de malaxage. Il est par exemple compris entre 20 secondes et 6 minutes.

La matière obtenue en sortie de l'extrudeuse se présente sous forme d'une pâte humide. Cette pâte peut être broyée et/ou séchée, pour former des granules qui peuvent être utilisés pour l'étape subséquente du procédé selon l'invention. Ces granules peuvent autrement être incorporés dans une matrice polymère, notamment thermoplastique, pour fabriquer un matériau composite.

Préférentiellement, la pâte obtenue en sortie de l'extrudeuse est utilisée directement pour l'étape suivante du procédé selon l'invention, sans étape intermédiaire de séchage.

Dans des modes de mise en œuvre particuliers de l'invention, cette pâte est soumise, avant sa mise en forme en feuille, à au moins une étape de traitement dans une extrudeuse bi-vis, à une température comprise entre 10 et 40 °C, en présence d'eau dans une quantité telle que le rapport en poids d'eau par rapport au poids de matière sèche de ladite pâte est compris entre 1,7 et 6. Cette étape de traitement de la pâte par extrusion peut répondre à l'une ou plusieurs des caractéristiques décrites ci-avant en référence à l'étape de traitement par extrusion de la matière initiale.

La pâte obtenue à l'issue du traitement par extrusion de la matière initiale peut par exemple être soumise successivement à trois, quatre, ou même plus, telles étapes de traitement par extrusion, avant d'être soumise à l'étape de mise en forme de feuille du procédé selon l'invention.

La pâte obtenue à l'issue de cette ou ces étapes d'extrusion supplémentaire(s) est avantageusement d'autant plus souple et homogène, en ce qui concerne en particulier la taille et le diamètre des fibres qu'elle contient, que le nombre de passages successifs dans l'extrudeuse a été important.

Préférentiellement, au cours de cette ou ces étape(s) d'extrusion supplémentaire(s) de la pâte, l'énergie mécanique spécifique (EMS), exprimant le travail fourni par les vis de l'extrudeuse bi-vis pour cisailler la pâte, est comprise entre 100 et 800 Wh/kg, de préférence entre 100 et 500 Wh/kg.

L'énergie mécanique spécifique (EMS) est définie par l'équation suivante :

$$EMS = \frac{U \times I \times cos\varphi \times N}{N_{max} \times Q}$$

dans laquelle U représente la tension du moteur de l'extrudeuse bi-vis, exprimée en volts ; I représente l'intensité de ce moteur (valeur relevée), exprimée en ampères ; $cos\varphi$ représente le coefficient correcteur du moteur (fourni par le fabricant) ; N représente la vitesse de rotation des vis de l'extrudeuse, exprimée en tours/min ; $N_{max}$ représente la vitesse maximale de rotation des vis de l'extrudeuse, exprimée en tours/min ; et Q représente le débit d'entrée de la matière solide dans l'extrudeuse, exprimée en kg/h.

Dans des modes de mise en œuvre particuliers de l'invention, l'étape de mise en forme de la pâte en feuille est réalisée à température ambiante, c'est-à-dire à une température comprise entre 15 et 25 °C environ.

Elle est en outre préférentiellement réalisée sans ajout de liant, en utilisant uniquement une solution aqueuse. Cette solution aqueuse peut le cas échéant contenir un ou plusieurs additifs chimiques, tels que des colorants, pigments, agents plastifiants de sorte à conférer plus de souplesse à la feuille, tels que le glycérol par exemple. Chacun de ces additifs est alors introduit dans la solution aqueuse en petite quantité, inférieure ou égale à 2 % en poids par rapport au poids total de la suspension aqueuse, la quantité totale d'additif(s) n'excédant pas 10 % en poids par rapport au poids total de la suspension aqueuse.

Préférentiellement, l'étape de mise en forme de la pâte à base de cuir en feuille est réalisée selon une technique utilisée classiquement dans l'industrie papetière pour la formation de feuilles à base de cellulose.

Ainsi, dans des modes de mise en œuvre particuliers de l'invention, la mise en forme de la pâte en feuille comprend la dilution de cette pâte dans un véhicule aqueux, pour former une suspension aqueuse, la projection de cette suspension aqueuse sur un dispositif de formation de feuille, puis le séchage de la feuille ainsi obtenue.

Le véhicule aqueux utilisé est préférentiellement dépourvu de liant, notamment de polymère ou précurseur de polymère.

Préférentiellement, la suspension aqueuse contient 5 à 15 % en poids de la pâte par rapport au poids total de la suspension aqueuse.

Le dispositif de formation de feuille peut être de tout type utilisé de manière classique en elle-même dans le domaine de l'industrie papetière. Il peut notamment comprendre une toile, un fil ou une grille en mouvement, notamment en rotation, contre lequel / laquelle la suspension aqueuse est projetée. La formation d'une feuille en matière solide s'accompagne alors d'un égouttage simultané de cette feuille.

A titre d'exemple, il peut être utilisé un dispositif tel que celui commercialisé par la société Techpap, dans lequel une feuille est formée par la projection, selon un mouvement vertical, d'une suspension aqueuse de matière sur une grille disposée dans un récipient cylindrique rotatif, cette grille étant complètement immergée dans un mur d'eau. L'eau contenue dans la feuille en formation est alors drainée par force centrifuge. Une fois la feuille égouttée, elle peut être retirée du dispositif pour son pressage éventuel, et son séchage.

Le séchage de la feuille obtenue peut être réalisé de toute manière classique en elle-même pour l'homme du métier, par exemple à l'air libre et température ambiante, ou en étuve, par exemple à une température comprise entre 20 et 50 °C, pendant quelques minutes, par exemple entre 2 et 60 minutes.

La feuille à base de cuir obtenue par le procédé selon l'invention peut présenter toute épaisseur, par exemple une épaisseur comprise entre 0,1 et 2,5 mm. Sa densité peut varier entre 180 et 300 g/m$^2$.

Elle est en outre peu hygroscopique.

Elle présente avantageusement un bel aspect esthétique, une bonne uniformité d'aspect, une souplesse équivalent à celle de la matière initiale, un bon caractère cohésif et de bonnes propriétés mécaniques. Elle peut notamment présenter, lors d'un test en traction réalisé dans le sens longitudinal (les fibres de collagène s'étant naturellement orientées dans ce sens longitudinal lors de la fabrication de la feuille), un allongement à la rupture de 14 %.

La feuille à base de cuir obtenue par le procédé selon l'invention, formée très majoritairement de cuir, peut avantageusement être utilisée pour la fabrication d'articles divers tels que des articles de maroquinerie, des objets d'art et de création, notamment dans le domaine de la mode, des articles de protection, des articles de présentation, par exemple sous forme de gaines pour supports de présentation, etc.

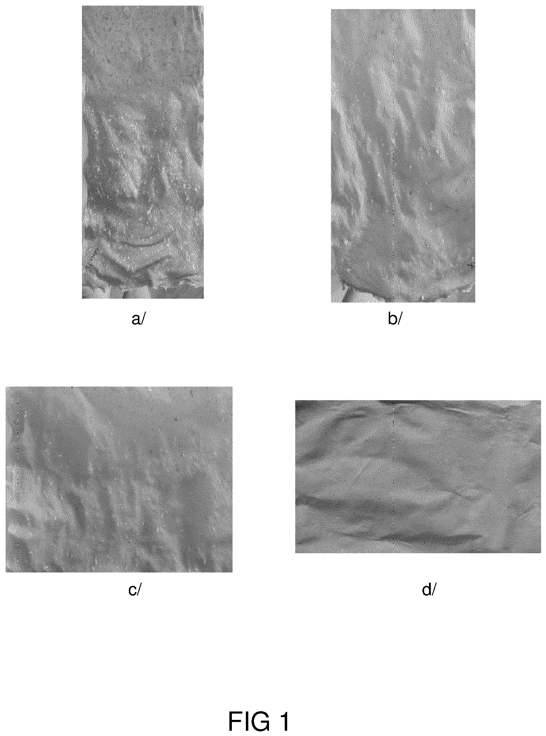

Les caractéristiques et avantages de l'invention apparaîtront plus clairement à la lumière des exemples de mise en œuvre ci-après, fournis à simple titre illustratif et nullement limitatifs de l'invention, avec l'appui de la figure 1, qui montre des photographies de feuilles à base de cuir obtenues conformément à l'invention, en a/, b/ et c/ à partir de dérayures de cuir tanné de manière synthétique, l'étape de mise en forme de feuille ayant été réalisée en a/ après une seule étape de traitement par extrusion de la matière, en b/ après deux étapes successives de traitement par extrusion de la matière, en c/ après trois étapes successives de traitement par extrusion de la matière, et en d/ à partir de cuir pleine fleur tanné au chrome prébroyé, l'étape de mise en forme de feuille ayant été réalisée après une étape de traitement par extrusion de la matière.

Exemple 1 - Obtention de pâte par extrusion de cuir sous forme particulaire

On utilise une extrudeuse bi-vis CLEXTRAL BC-45 équipée d'un moteur entrainant les vis d'une puissance de 66 kW et d'une pompe pour l'alimentation en eau DKM de débit 20 l/h.

La vitesse de rotation des vis est fixée à 600 tours/min.

La matière à traiter est introduite dans l'extrudeuse par l'intermédiaire d'une trémie associée à une balance calibrée.

Une série de modules sont assemblés selon un agencement assurant une alternance de zones de convoyage et de zones de malaxage.

Un premier module de convoyage, du type à vis à pas direct à gorge trapézoïdale double filets, est disposé en début de vis, au niveau de l'entrée d'alimentation en matière première. Les autres modules de convoyage, au nombre de 10, sont du type à vis à pas direct à gorge en U double filets, permettant à la fois de convoyer la matière mais aussi de la comprimer en réduisant le pas du filet.

Les modules de malaxage, au nombre de 7, sont du type malaxeurs bilobes, qui permettent la pénétration de l'eau dans la matière et d'en réaliser un défibrage. Ces malaxeurs sont montés inclinés, sur les deux vis respectives, d'un angle respectivement de 30 et -30 degrés, ce qui augmente la contrainte de cisaillement ressentie par la matière, assure un bon malaxage de la matière et une résistance à son avancement favorisant son bon défibrage.

Dans chacun des modules de convoyage, les pas de vis sont compris entre 25 et 70 mm. La longueur de chaque module est comprise entre 50 et 100 mm.

La température appliquée dans l'extrudeuse est de 30°C.

Pour toutes les expériences, le ratio eau/matière sèche à traiter est égal à 4. L'eau est introduite dans l'extrudeuse, dans le premier module de convoyage.

Le débit d'entrée de la matière initiale dans l'extrudeuse est fixé à 7 kg/h, exprimé en matière sèche.

Lorsque la matière est soumise à plusieurs passages successifs dans l'extrudeuse, le débit d'entrée de la pâte dans l'extrudeuse, pour le second passage et les suivants, est fixé à 28,8 kg/h, exprimé en matière humide. La pâte obtenue en sortie d'extrudeuse n'est soumise à aucune étape de séchage avant sa réintroduction pour un nouveau passage dans l'extrudeuse.

Pour chaque pâte obtenue, les caractéristiques de la matière de départ, le nombre de passages dans l'extrudeuse et la caractéristique de la matière obtenue, sont indiquées dans le tableau 1 ci-après. Dans ce tableau Synth. désigne des dérayures de cuir à tannage synthétique sous forme de particules de longueur comprise entre 1 cm et 10 cm, et Nat. désigne du cuir pleine fleur tanné au chrome prébroyé sous forme de copeaux de longueur environ 1 cm.

Tableau 1

| Pâte | PS1 | PS2 | PS3 | PN1 |
|---|---|---|---|---|
| Matière initiale | Synth. | Synth. | Synth. | Nat. |
| Nombre de passages dans l'extrudeuse | 1 | 2 | 3 | 1 |
| Taux de matière sèche dans la pâte finale | 19,2 % | 20 % | 20,4 % | 41,1 % |

Chacune des pâtes obtenues contient de longues fibres de collagène séparées les unes des autres, cette séparation augmentant avec le nombre de passages dans l'extrudeuse, de même que l'homogénéité de longueur des fibres.

Pour les pâtes PS1 et PN1, on note qu'il existe quelques zones non transformées avec des grosseurs dans la pâte. Ces grosseurs diminuent en taille et en nombre au fur et à mesure des passages suivants dans l'extrudeuse.

Exemple 2 - Mise en forme de la pâte

Les pâtes obtenues à l'exemple 1 sont mises en forme de feuille.

A cet effet, chacune des pâtes est mise en suspension dans l'eau, avec un ratio massique eau/pâte égal à 250, équivalent à 2 % en poids de pâte dans la suspension aqueuse.

Chaque suspension aqueuse ainsi obtenue est traitée dans un appareil de formation de feuille automatique FDA de la société Techpap. La suspension aqueuse est projetée de haut en bas sur une grille disposée dans le tambour circulaire de l'appareil tournant rapidement. Une fois la solution pulvérisée, la feuille qui s'est formée est récupérée et laissée sécher soit à l'air libre, soit en étuve à 30 °C pendant 30 min.

Des feuilles d'épaisseurs entre 0,2 et 0,75 mm sont ainsi préparées à partir des pâtes obtenues à l'exemple 1.

On observe qu'une fois sèches, chacune de ces feuilles présente une bonne cohésion. Les fibres se sont naturellement arrangées selon la direction longitudinale de la feuille.

La densité des feuilles obtenues varie entre 180 et 300 g/m$^2$.

Leur taux d'hydroscopie varie entre 2 et 5 %.

Des photographies de feuilles obtenues à partir des pâtes PS1, PS2, PS3 et PN1 sont montrées sur la figure 1, respectivement en a/, b/, c/ et d/. Elles présentent toutes un bel aspect esthétique et une bonne continuité. On observe que plus le nombre de passages dans l'extrudeuse a été important, plus l'apparence de la feuille obtenue est homogène.

Exemple 3 - Caractérisation des propriétés mécaniques des feuilles

Des éprouvettes sont prélevées à l'aide d'un emporte-pièce dans chacune des feuilles formées à l'exemple 2, pour certaines dans le sens longitudinal de la feuille (éprouvettes longitudinales), et pour d'autres perpendiculairement à ce sens longitudinal (éprouvettes transversales). Ces éprouvettes sont ensuite stabilisées dans une chambre climatique à 23 °C, 50 % d'humidité relative pendant 7 jours.

Les performances mécaniques des feuilles sont déterminées par des tests de traction réalisées sur chacune de ces éprouvettes, sur un banc de traction, en utilisant la méthode décrite dans la norme ISO 527-1:2012. La force est appliquée à une vitesse constante de 2,5 mm/min à 23 °C. Un capteur de force de 500 N est utilisé pour mesurer la force.

Les résultats obtenus sont indiqués dans le tableau 2 ci-après. Dans ce tableau, les résultats sont indiqués pour des feuilles ayant été soumises à un séchage en étuve à 30 °C pendant 30 min, sauf indication contraire d'un séchage naturel (« SN »). « Long. » y indique en outre une traction réalisée selon le sens longitudinal de la feuille, c'est-à-dire sur les éprouvettes longitudinales prélevées sur la feuille, et « Larg. » y indique une traction réalisée selon la direction perpendiculaire au sens longitudinal de la feuille, c'est-à-dire sur les éprouvettes transversales prélevées sur la feuille.

Tableau 2

| | Pâte | PS1 | PS1 | PS2 | PS2 (SN) | PS3 | PN1 (SN) |
|---|---|---|---|---|---|---|---|
| Long. | Epaisseur moyenne (mm) | 0,73 | 0,40 | 0,36 | 0,31 | 0,25 | 0,20 |
| | Contrainte max. (MPa) | 38 | 36 | 39,6 | 43 | 42 | 4 |
| | Module de traction (GPa) | 0,74 | 1,09 | 0,77 | 0,76 | 0,82 | 0,14 |
| | Allongement (%) | 7 | 12 | 11 | 13 | 14 | 4 |
| Larg. | Epaisseur moyenne (mm) | 0,60 | 0,41 | 0,36 | 0,31 | 0,22 | 0,20 |
| | Contrainte max. (MPa) | 19 | 21 | 16 | 22 | 21 | 2 |
| | Module de traction (GPa) | 0,47 | 0,57 | 0,39 | 0,43 | 0,49 | 0,18 |
| | Allongement (%) | 5 | 8 | 9 | 9 | 8 | 5 |

On observe que de bonnes propriétés mécaniques sont obtenues pour toutes le feuilles préparées conformément à l'invention. L'épaisseur de la feuille joue un faible rôle dans les performances en traction, ce qui démontre l'homogénéité de matière au sein des feuilles.

Les performances mécaniques augmentent globalement avec le nombre de passages successifs dans l'extrudeuse. La feuille obtenue à partir de la pâte PS3, correspondant à trois traitements successifs dans l'extrudeuse, présente non seulement un aspect plus lisse et homogène que les autres, mais également les meilleures propriétés mécaniques globales.

Exemple comparatif 1 - ratio eau/matière sèche à traiter inférieur à 1,7

Des dérayures de cuir à tannage synthétique sous forme de particules de longueur comprise entre 1 cm et 10 cm, sont traitées comme décrit dans l'Exemple 1, mais avec un ratio eau/matière sèche à traiter égal à 1,5 (un seul passage dans l'extrudeuse).

L'extrudât obtenu ne contient pas de fibres longues. Après séchage en étuve ventilée à 40 °C pendant 24 h, il en résulte une poudre de granulométrie inférieure à 4mm. Cet extrudât ne présente pas de propriétés physiques permettant sa mise en forme de feuille.

Exemple comparatif 2 - ratio eau/matière sèche à traiter supérieur à 6

Des dérayures de cuir à tannage synthétique sous forme de particules de longueur comprise entre 1 cm et 10 cm, sont traitées comme décrit dans l'Exemple 1, mais avec un ratio eau/matière sèche à traiter égal à 6,2. De telles conditions ne permettent pas de réaliser un défibrage satisfaisant du cuir, et d'obtenir une pâte exploitable pour fabriquer une feuille par simple mise en forme.

**Revendications**

1. Procédé de fabrication d'une feuille à base de cuir, **caractérisé en ce qu'**il comprend :

   - la préparation d'une pâte par une étape de traitement d'une matière contenant au moins 70 % en poids de cuir préparé à partir de peau d'un animal non-humain dans une extrudeuse bi-vis à une température comprise entre 10 et 40 °C, en présence d'eau dans une quantité telle que le rapport en poids d'eau par rapport à ladite matière est compris entre 1,7 et 6 ;
   - et la mise en forme de ladite pâte en feuille.

2. Procédé selon la revendication 1, selon lequel ladite matière se présente sous forme particulaire.

3. Procédé selon la revendication 2, selon lequel ladite matière présente une granulométrie, mesurée par tamisage, comprise entre 5 mm et 10 cm.

4. Procédé selon l'une quelconque des revendications 1 à 3, selon lequel, dans l'étape de préparation de ladite pâte, le rapport en poids d'eau par rapport à ladite matière est compris entre 1,7 et 4.

**5.** Procédé selon l'une quelconque des revendications 1 à 4, selon lequel ladite extrudeuse bi-vis est une extrudeuse à vis co-rotatives.

**6.** Procédé selon l'une quelconque des revendications 1 à 5, selon lequel la vitesse de rotation des vis de l'extrudeuse bi-vis est comprise entre 100 et 700 tours/min.

**7.** Procédé selon l'une quelconque des revendications 1 à 6, selon lequel ladite extrudeuse bi-vis comporte au moins trois zones de malaxage.

**8.** Procédé selon l'une quelconque des revendications 1 à 7, selon lequel le débit d'entrée de ladite matière dans l'extrudeuse bi-vis est compris entre 1 et 15 kg de matière sèche par heure.

**9.** Procédé selon l'une quelconque des revendications 1 à 8, selon lequel la mise en présence de ladite matière et de l'eau est réalisée par introduction d'une solution aqueuse dans l'extrudeuse bi-vis.

**10.** Procédé selon la revendication 9, selon lequel ladite introduction d'une solution aqueuse dans l'extrudeuse bi-vis est réalisée avant une première zone de malaxage de ladite extrudeuse bi-vis.

**11.** Procédé selon l'une quelconque des revendications 1 à 10, selon lequel ladite pâte est soumise, avant sa mise en forme en feuille, à au moins une étape de traitement dans une extrudeuse bi-vis, à une température comprise entre 10 et 40 °C, en présence d'eau dans une quantité telle que le rapport en poids d'eau par rapport au poids de matière sèche de ladite pâte est compris entre 1,7 et 6.

**12.** Procédé selon la revendication 11, selon lequel, dans ladite étape de traitement de ladite pâte, le rapport en poids d'eau par rapport au poids de matière sèche de ladite pâte est compris entre 1,7 et 4.

**13.** Procédé selon l'une quelconque des revendications 1 à 12, selon lequel la mise en forme de ladite pâte en feuille comprend la dilution de ladite pâte dans un véhicule aqueux, pour former une suspension aqueuse, la projection de ladite suspension aqueuse sur un dispositif de formation de feuille, puis le séchage de la feuille ainsi obtenue.

**14.** Procédé selon l'une quelconque des revendications 1 à 13, selon lequel ladite suspension aqueuse contient 5 à 15 % en poids de ladite pâte par rapport au poids total de ladite suspension aqueuse.


**Patentansprüche**

**1.** Verfahren zur Herstellung einer Folie auf Lederbasis, **dadurch gekennzeichnet, dass** es Folgendes umfasst:

- die Zubereitung einer Paste durch einen Schritt der Behandlung eines Materials, das mindestens 70 Gewichtsprozent Leder enthält, das aus der Haut eines nichtmenschlichen Tieres in einem Zweischneckenextruder bei einer Temperatur zwischen 10 und 40 °C zubereitet wird, bei Vorhandensein von Wasser in einer Menge, die so groß ist, dass das Gewichtsverhältnis von Wasser zu besagtem Material zwischen 1,7 und 6 liegt;
- und das Formen der Folienpaste.

**2.** Verfahren nach Anspruch 1, wobei das Material in Partikelform vorliegt.

**3.** Verfahren nach Anspruch 2, wobei das Material eine Siebkorngröße zwischen 5 mm und 10 cm aufweist.

**4.** Verfahren nach einem der Ansprüche 1 bis 3, wobei im Schritt der Zubereitung der Paste das Gewichtsverhältnis von Wasser zu dem Material zwischen 1,7 und 4 liegt.

**5.** Verfahren nach einem der Ansprüche 1 bis 4, wobei der Zweischneckenextruder ein Mitdrehschneckenextruder ist.

**6.** Verfahren nach einem der Ansprüche 1 bis 5, wobei die Drehzahl der Schrauben des Zweischneckenextruders zwischen 100 und 700 U/min liegt.

**7.** Verfahren nach einem der Ansprüche 1 bis 6, wobei der Zweischneckenextruder mindestens drei Mischbereiche aufweist.

**8.** Verfahren nach einem der Ansprüche 1 bis 7, wobei die Zulaufmenge des Materials in den Zweischneckenextruder zwischen 1 und 15 kg Trockenmaterial pro Stunde beträgt.

**9.** Verfahren nach einem der Ansprüche 1 bis 8, wobei das Vorhandensein des Materials und des Wassers durch Einbringen einer wässrigen Lösung in den Zweischneckenextruder erfolgt.

**10.** Verfahren nach Anspruch 9, wobei das Einbringen einer wässrigen Lösung in den Zweischneckenextruder vor einem ersten Mischbereich des Zweischneckenextruders erfolgt.

**11.** Verfahren nach einem der Ansprüche 1 bis 10, wobei die Paste vor ihrer Folienformung mindestens einem Behandlungsschritt in einem Zweischneckenextruder bei einer Temperatur zwischen 10 und 40 °C unterzogen wird, bei Vorhandensein von Wasser in einer Menge, die so ist, dass das Gewichtsverhältnis von Wasser zu Trockenmasse der Paste zwischen 1,7 und 6 liegt.

**12.** Verfahren nach Anspruch 11, wobei in dem Behandlungsschritt der Paste das Gewichtsverhältnis von Wasser zu Trockenmasse der Paste zwischen 1,7 und 4 liegt.

**13.** Verfahren nach einem der Ansprüche 1 bis 12, wobei die Formung der Folienpaste das Verdünnen der Paste in einem wässrigen Fahrzeug zur Bildung einer wässrigen Suspension, das Spritzen der wässrigen Suspension auf eine Folienformvorrichtung und anschließendes Trocknen der so erhaltenen Folie umfasst.

**14.** Verfahren nach einem der Ansprüche 1 bis 13, wobei die wässrige Suspension 5 bis 15 Gewichtsprozent der Paste bezogen auf das Gesamtgewicht der wässrigen Suspension enthält.

## Claims

**1.** Method for manufacturing a leather-based sheet, **characterized in that** it comprises:

- preparing a paste by a step of treating a material containing at least 70% by weight of leather prepared from skin of a non-human animal in a twin-screw extruder at a temperature between 10 and 40°C, in the presence of water in a quantity such that the weight ratio of water to said material is between 1.7 and 6;
- and shaping said paste into a sheet.

**2.** Method according to claim 1, wherein said material is in particle form.

**3.** Method according to claim 2, wherein said material has a particle size, measured by sieving, between 5 mm and 10 cm.

**4.** Method according to any one of claims 1 to 3, wherein, in the step of preparing said paste, the weight ratio of water to said material is between 1.7 and 4.

**5.** Method according to any one of claims 1 to 4, wherein said twin-screw extruder is an extruder with co-rotating screws.

**6.** Method according to any one of claims 1 to 5, wherein the speed of rotation of the screws of the twin-screw extruder is between 100 and 700 rpm.

**7.** Method according to any one of claims 1 to 6, wherein said twin-screw extruder includes at least three mixing zones.

**8.** Method according to any one of claims 1 to 7, wherein the flow rate of entry of said material into the twin-screw extruder is between 1 and 15 kg of dry matter per hour.

**9.** Method according to any one of claims 1 to 8, wherein placing said material in the presence of water is carried out by introduction of an aqueous solution into the twin-screw extruder.

**10.** Method according to claim 9, wherein said introduction of an aqueous solution into the twin-screw extruder is carried out before a first mixing zone of said twin-screw extruder.

11. Method according to any one of claims 1 to 10, wherein said paste is subjected, before it is formed into a sheet, to at least one step of treating in a twin-screw extruder, at a temperature between 10 and 40 °C, in the presence of water in a quantity such that the ratio of weight of water to the weight of dry matter of said paste is between 1.7 and 6.

12. Method according to claim 11, wherein, in said step of treating said paste, the ratio of weight of water to the weight of dry matter of said paste is between 1.7 and 4.

13. Method according to any one of claims 1 to 12, wherein the shaping of said paste into a sheet comprises the dilution of said paste in an aqueous vehicle, to form an aqueous suspension, the projection of said aqueous suspension onto a sheet-forming device, then the drying of the sheet thus obtained.

14. Method according to any one of claims 1 to 13, wherein said aqueous suspension contains 5 to 15% by weight of said paste relative to the total weight of said aqueous suspension.

a/

b/

c/

d/

FIG 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2997830 A